# EUROPEAN PATENT APPLICATION

(11) **EP 2 372 419 A1**
(43) Date of publication of application: **05.10.2011**
(21) Application number: 11160148.0
(22) Date of filing: 29.03.2011
(51) Int. Cl.: G02B 6/138, G02B 6/43, B29D 11/00

(54) **Method for manufacturing optical waveguide**

(30) Priority: 31.03.2010 JP 2010084298
(71) Applicant: FUJITSU LIMITED, Kawasaki-shi, Kanagawa 211-8588 (JP)
(72) Inventor: Morita, Yoshihiro, Kawasaki-shi, Kanagawa 211-8588 (JP); Ooi, Takahiro, Kawasaki-shi, Kanagawa 211-8588 (JP); Yamada, Tetsuro, Kawasaki-shi, Kanagawa 211-8588 (JP); Matsui, Akiko, Kawasaki-shi, Kanagawa 211-8588 (JP); Sugane, Mitsuhiko, Kawasaki-shi, Kanagawa 211-8588 (JP); Mukouyama, Takahide, Kawasaki-shi, Kanagawa 211-8588 (JP)
(74) Representative: Lewin, David Nicholas

(57) **Abstract**

A method for manufacturing an optical waveguide (29) in which multiple cores (29a) are embedded in a parallel-arranged fashion within a single cladding (29b), the cores having a refractive index of light different from that of the cladding, the method includes forming the multiple cores in a state where the adjacent cores are connected by a rib (29a4,29a5,29a6), forming the cladding around the rib and the multiple cores by curing a cladding material there around, and a cutting to the rib.

## Description

### FIELD

The embodiment discussed herein is related to a method for manufacturing optical waveguides.

### BACKGROUND

Generally, an optical waveguide has a structure in which a core serving as an optical path is surrounded by a cladding having a refractive index different from that of the core. This difference in refractive indices causes light traveling through the core to be reflected at an interface between the core and the cladding. The core and the cladding are both composed of a resinous material, such as polyimide or epoxy, as a main component. The core is given a refractive index different from that of the cladding by adding fluorine, bromine, or the like to this main component.

Communication using such an optical waveguide is not only used between systems, but also between boards in a device having boards equipped with multiple electronic components. In the case of board-to board communication within the device, the communication is achieved by using multiple optical waveguides for the purpose of achieving parallel communication or high-speed communication. With regard to each optical waveguide used for such communication, narrow cores are embedded in a parallel-arranged fashion within a single cladding. Furthermore, the optical waveguide is manufactured by fixing both ends of the multiple arranged cores and then curing a cladding material around the cores.

See Japanese Laid-open Patent Publication No. 2006-67360 for an example.

### SUMMARY

The present technology relates to manufacturing of an optical waveguide by forming multiple cores in a state where the adjacent cores are connected by a rib, forming a cladding around the rib and the multiple formed cores by curing a cladding material there around, and then performing a cutting process from the surface of the formed cladding to the rib.
According to an aspect of the invention, a method for manufacturing an optical waveguide in which multiple cores are embedded in a parallel-arranged fashion within a single cladding, the cores having a refractive index of light different from that of the cladding, the method includes forming the multiple cores in a state where the adjacent cores are connected by a rib, forming the cladding around the multiple cores by curing a cladding material there around, and a cutting to the rib.

The object and advantages of the invention may be realized and attained by means of the elements and combinations particularly pointed out in the claims.

### BRIEF DESCRIPTION OF DRAWINGS

FIG. 1 is a perspective view of an electronic-device cabinet that accommodates boards that perform communication using optical waveguides according to this embodiment.

FIG. 2 is a perspective view of an optical transmission circuit device.

FIG. 3 is a perspective view showing a base plate and a center plate formed in the optical transmission circuit device.

FIG. 4 is a schematic cross-sectional view taken along line IV-IV of the optical transmission circuit device in FIG. 3.

FIG. 5 is a perspective view of an optical waveguide.

FIG. 6 is a perspective view of ribs before a cladding is formed by filling and curing in this embodiment.

FIG. 7 is a perspective view showing the cladding in the filled and cured state in this embodiment.

FIG. 8 schematically illustrates an NC machine tool.

FIG. 9 schematically illustrates a state where the optical waveguide is placed on a base of the NC machine tool.

FIG. 10 illustrates a table showing drilling-position information.

FIG. 11 is a flow chart of a drilling process.

FIG. 12 is a perspective view of the optical waveguide after the drilling process.

FIG. 13 is a perspective view of the optical waveguide after second segments have been removed therefrom.

FIG. 14 is a perspective view of the optical waveguide obtained after a second filling and curing process.

### DESCRIPTION OF EMBODIMENTS

An embodiment will be described below.

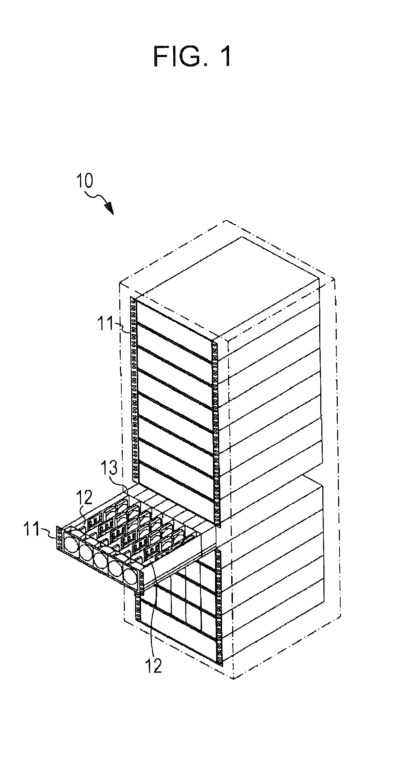

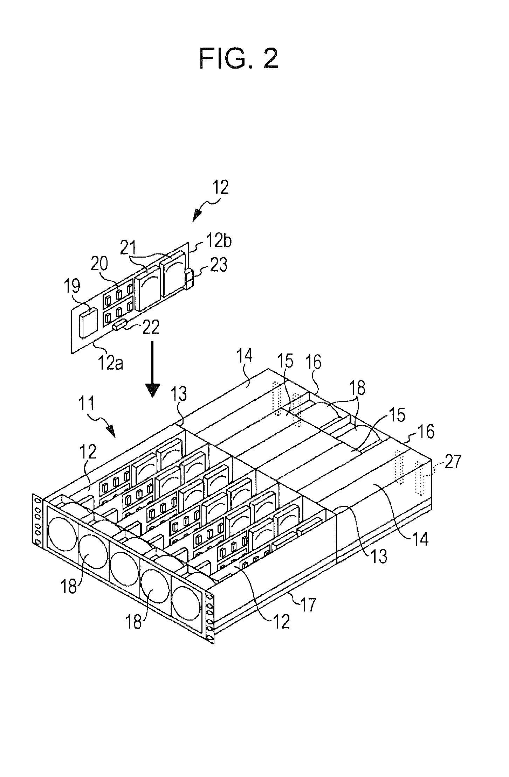

FIG. 1 is a perspective view of an electronic-device cabinet that accommodates boards that perform communication using optical waveguides according to this embodiment. Specifically, FIG. 1 shows one of optical transmission circuit devices pulled out from the electronic-device cabinet. FIG. 2 is a perspective view of the optical transmission circuit device.

As shown in FIGs. 1 and 2, an electronic-device cabinet 10 stores optical transmission circuit devices 11 in a stacked manner. Each optical transmission circuit device 11 is provided with multiple boards 12 on a base plate 17, input-output units 14 separated from each other by the boards 12 and a center plate 13, and a power supply unit 15. Forced fans 18 are provided between the front face of the optical transmission circuit device 11 and the center plate 13 and also between the center plate 13 and a rear plate 16. Thus, ambient air is taken in as cooling air through the front face of the optical transmission circuit device 11, travels through between the boards 12, and is made to flow outward through openings (not viewable in the drawings) provided in the rear plate 16 via openings (not viewable in the drawings) in the center plate 13.

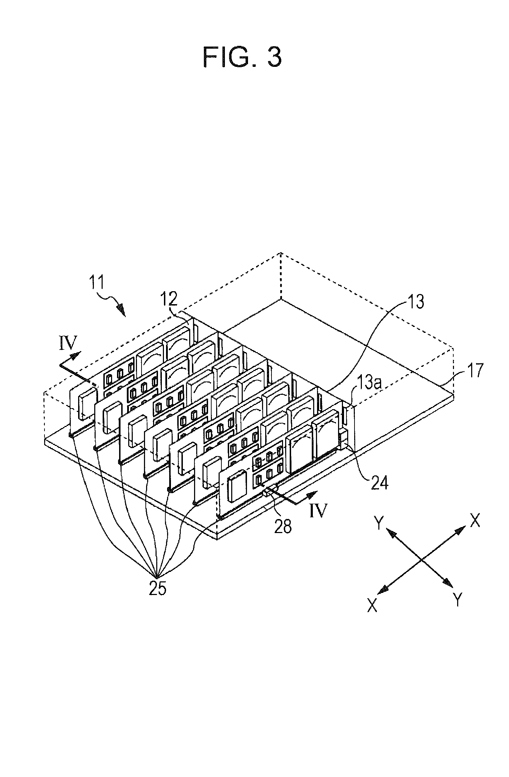

The boards 12 are each provided with a central processing unit (CPU) 19, a memory circuit 20, a hard disk unit 21, a photoelectric conversion circuit 22, wiring (not shown) such as a bus for transferring data between these units, and a bus driver. The boards 12 are disposed substantially orthogonally to the base plate 17 of the optical transmission circuit device 11 and are parallel to each other. A lower edge 12a of each board 12 is fitted into a corresponding rail on the base plate 17, as shown in FIG. 3 to be described later, and a connector 23 provided at a rear edge 12b of the board 12 for a control signal and for power supply is positioned by being engaged with a corresponding connector shown in FIG. 3 (but not viewable in FIGs. 1 and 2) provided at the front face of the center plate 13. For example, the boards 12 are inserted into the rails from above the optical transmission circuit device 11, and the connectors 23 are subsequently pressed into the connectors in the center plate 13. A control signal is supplied from the input-output units 14 provided adjacent to the rear plate 16 via a cable (not shown), and is transmitted to another optical transmission circuit device from control-signal connectors 27 provided in the rear plate 16 via a cable. Power is directly supplied from the power supply unit 15 or from an external power source.

FIG. 3 is a perspective view showing the base plate 17 and the center plate 13 formed in the optical transmission circuit device 11. In FIG. 3, side plates and the rear plate 16 of the optical transmission circuit device 11 are omitted.

Referring to FIG. 3, the center plate 13 of the optical transmission circuit device 11 is provided with control-signal connectors 24 connected to the boards 12 and ventilation holes 13a for the cooling air.

In the base plate 17, rails 25 having openings engageable with the boards 12 extend from the front to the rear (X-axis direction in FIG. 3) and are arranged parallel to each other in a widthwise direction (Y-axis direction in FIG. 3) of the base plate 17. The base plate 17 is provided with optical connectors 28 for an optical transmission circuit.

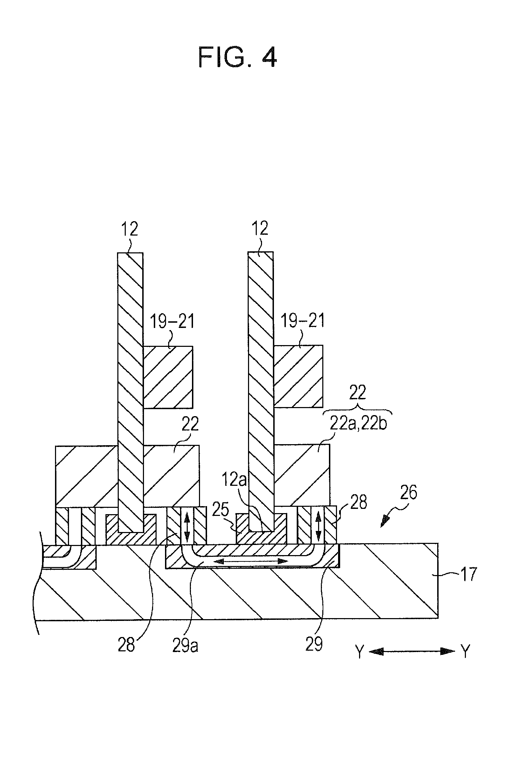

FIG. 4 is a schematic cross-sectional view taken along line IV-IV of the optical transmission circuit device 11 in FIG. 3.

Referring to FIG. 4, an optical transmission circuit 26 is formed of an optical waveguide 29 and optical connectors 28 connected to the optical waveguide 29 and to photoelectric conversion circuits 22 of the boards 12. With the optical transmission circuit 26, the boards 12 are capable of communicating with adjacent boards 12 by sending or receiving light thereto or therefrom via the corresponding photoelectric conversion circuits 22.

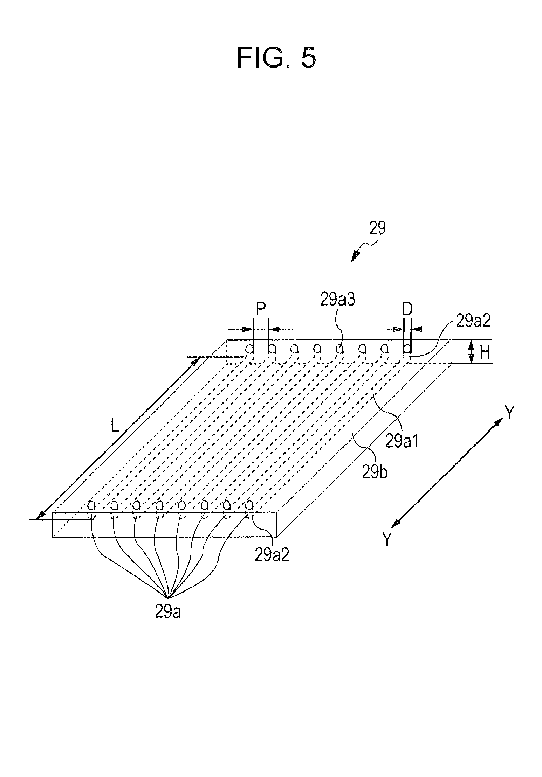

The optical waveguide 29 will now be described with reference to FIG. 5, which is a perspective view of the optical waveguide 29.

In this embodiment, the optical waveguide 29 has eight cores 29a that are arranged parallel to each other, and is formed by filling and curing a cladding 29b there around. The cores 29a each have a core diameter D of 50 µm and are arranged at a pitch P of 250 µm. The cores 29a each have a shape such that a first segment 29a1 thereof extends in a Y-Y direction and second segments 29a2 thereof extend upward orthogonally from opposite ends of the first segment 29a1. A free end 29a3 of each second segment 29a2 is exposed from the cladding 29b. This exposed section is to come into contact with the corresponding optical connector 28.

The cladding 29b is formed into a shape of a thin plate with a thickness H of about 1 mm and a length of about 20 cm. Therefore, the second segments 29a2 of each core 29a each have a length L of about 0.5 mm. (If the drawings were to be made by directly scaling down the aforementioned dimensions, the ratio between the length L and the thickness and the ratio between the pitch P and the core diameter D would be too large, making the explanation very difficult. Therefore, in this embodiment, the scales of the components are set to values different from the aforementioned values.)

Furthermore, the cores 29a and the cladding 29b are both composed of a resinous material, such as polyimide or epoxy, as a main component. The cores 29a are given a refractive index different from that of the cladding 29b by adding fluorine, bromine, or the like to this main component so that light traveling through the cores 29a is reflected at an interface between the cores 29a and the cladding 29b.

As mentioned above, in the related art, an optical waveguide is formed by arranging multiple cores parallel to each other, fixing the ends of the cores, and then forming a cladding around the cores by curing a cladding material there around. However, since the cores are normally composed of a resinous material, as mentioned above, the cores tend to deform readily with decreasing width, which is problematic in terms of linear precision. Moreover, this is also problematic in that, as distance increases, there is a high possibility of a core becoming deformed and coming into contact with an adjacent core. Therefore, at a narrow pitch of 250 µm and with a length of several tens of centimeters, it is difficult to prevent the narrow cores with a width in the order of micrometers, as mentioned above, from coming into contact with each other by simply fixing the ends of the cores.

In light of this, in this embodiment, the multiple cores 29a are formed in a state where ribs that connect the adjacent cores 29a are provided, and the cladding 29b is subsequently formed around the cores 29a by curing a cladding material there around. Finally, the ribs are removed.

A process for forming the cores 29a will be described in detail below.

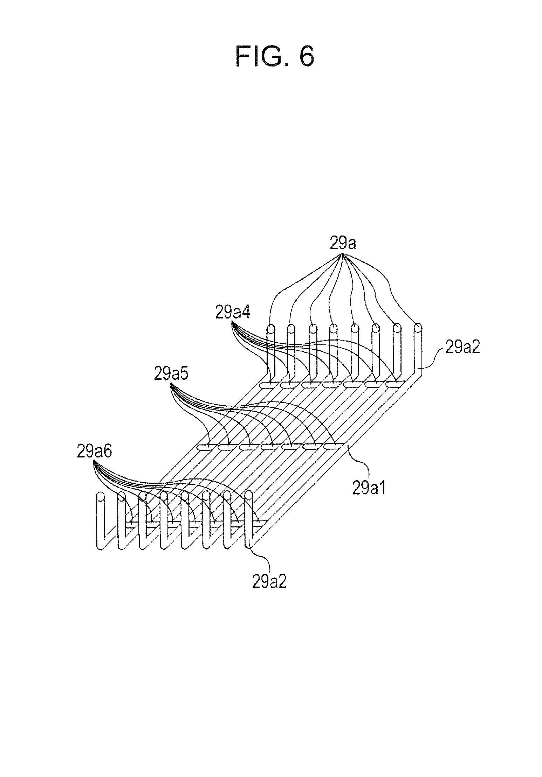

FIG. 6 is a perspective view of ribs 29a4, 29a5, and 29a6 before the cladding 29b is formed in this embodiment.

Regarding the cores 29a in this state, the adjacent cores 29a are connected to each other at three sections of the first segment 29a1 by the ribs 29a4, 29a5, and 29a6, respectively. By providing the ribs at predetermined intervals in the first segment 29a1 of the cores 29a in this manner, the distance between the cores 29a can be properly maintained even if the first segment 29a1 were to be increased in length.

The ribs 29a4, 29a5, and 29a6 and the cores 29a may be composed of the same material, and are integrally formed using a mold in this embodiment. In contrast to the cores in the related art that need to be manufactured one by one before being arranged parallel to each other, the ribs 29a4, 29a5, and 29a6 and the cores 29a in this embodiment can be integrally formed so that the cores 29a can be readily manufactured.

Furthermore, the second segments 29a2 are formed longer than at the time of completion. However, after filling and curing the cladding 29b around the cores 29a, the second segments 29a2 are machined by, for example, cutting and grinding so that the second segments 29a2 do not protrude from the surface of the cladding 29b.

A process for forming the cladding 29b will now be described. When the cores 29a are completely formed, an operator fills and cures a cladding material, such as polyimide or epoxy, around the cores 29a so as to form the cladding 29b.

This process is performed by using a box-shaped mold so that the resultant cladding 29b has a shape of a thin plate.

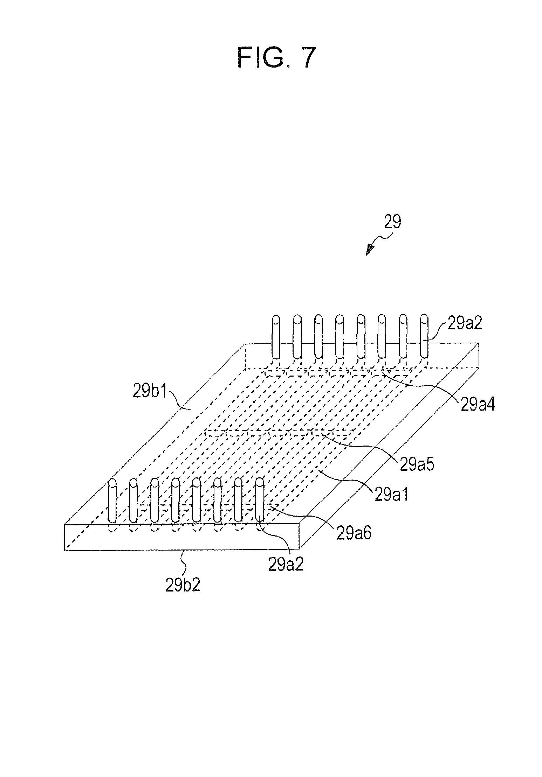

FIG. 7 is a perspective view showing the cladding 29b in the cured state.

This process for filling and curing the cladding 29b around the cores 29a is performed without the cores 29a being cut off from the ribs 29a4, 29a5, and 29a6.

Furthermore, in this state, the second segments 29a2 of the cores 29a protrude from the surface of the cladding 29b.

A process for removing the ribs 29a4, 29a5, and 29a6 will now be described. When the cladding 29b is completely formed, a removal process of the ribs 29a4, 29a5, and 29a6 is performed.

This removal process is performed using a tool, such as a drill, from a surface 29b2 of the cladding 29b opposite a surface 29b1 thereof from which the second segments 29a2 protrude.

As mentioned above, since the cores 29a are arranged at a very narrow pitch, the process is performed using, for example, a numerical control (NC) machine tool.

In this case, positioning is performed by estimating the positions of the ribs on the basis of the protruding positions of the second segments 29a2 of the cores 29a.

This process using the NC machine tool will now be described.

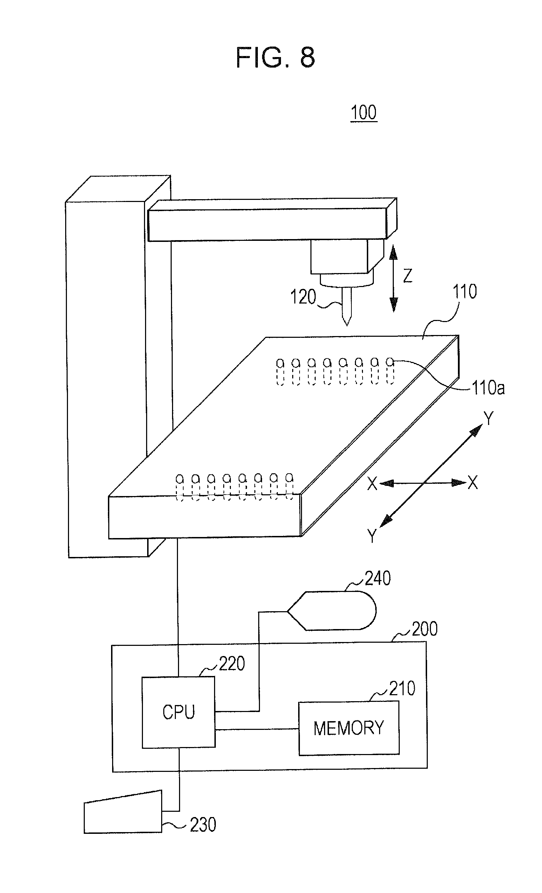

FIG. 8 schematically illustrates an NC machine tool 100 used for performing the drilling process.

The NC machine tool 100 performs various processes on the basis of a command from a computer 200 serving as a higher-level device.

The NC machine tool 100 has a base 110 that can move two-dimensionally on an X-Y plane on the basis of a command from the computer 200. This base 110 is driven by a stepping motor or the like, and because this mechanism itself is commonly known, a detailed description thereof will be omitted here.

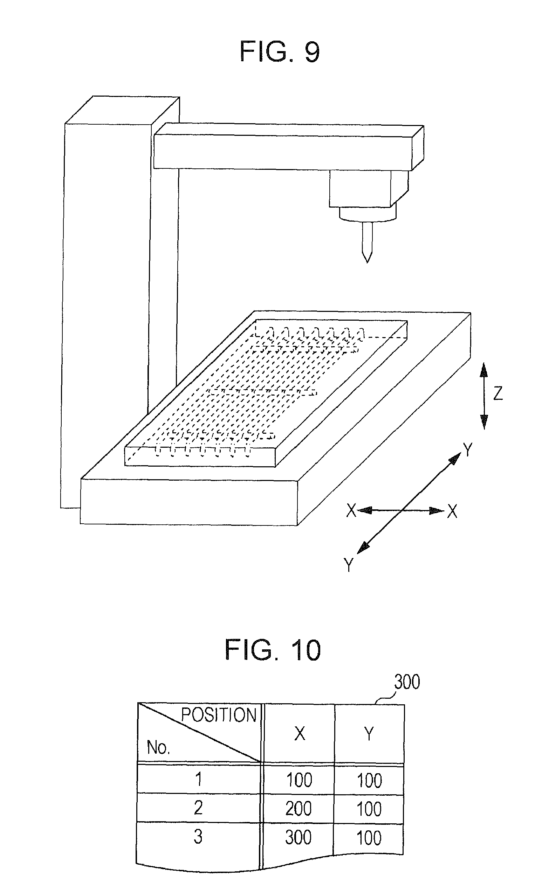

The base 110 has sixteen insertion holes 110a. The insertion holes 110a positionally correspond to the second segments 29a2 of the cores 29a in the optical waveguide 29. The second segments 29a2 set in the positions shown in FIG. 7 are inserted and placed into the insertion holes 110a so that the cores 29a are positioned on the base 110. FIG. 9 illustrates a state where the optical waveguide 29 is placed on the base 110, as described above.

Reference numeral 120 denotes a drill that can move in a Z-axis direction on the basis of a command from the computer 200. Since this Z-axis moving mechanism is also commonly known, a description thereof will be omitted here.

The computer 200 includes a central processing unit (CPU) 220 and a memory 210.

The memory 210 stores drilling-position information 300 shown in a table in FIG. 10. Since the cores 29a of the optical waveguide 29 placed on the base 110 are positionally fixed, as described above, a repositioning process does not have to process when placing the optical waveguide 29 onto the base 110. This drilling-position information 300 stores pieces of information equivalent to the number of rib-cutting locations (14 locations in this embodiment).

Referring back to FIG. 8, the computer 200 also includes an input unit 230 used by the operator for inputting a drilling command, and a display unit 240.

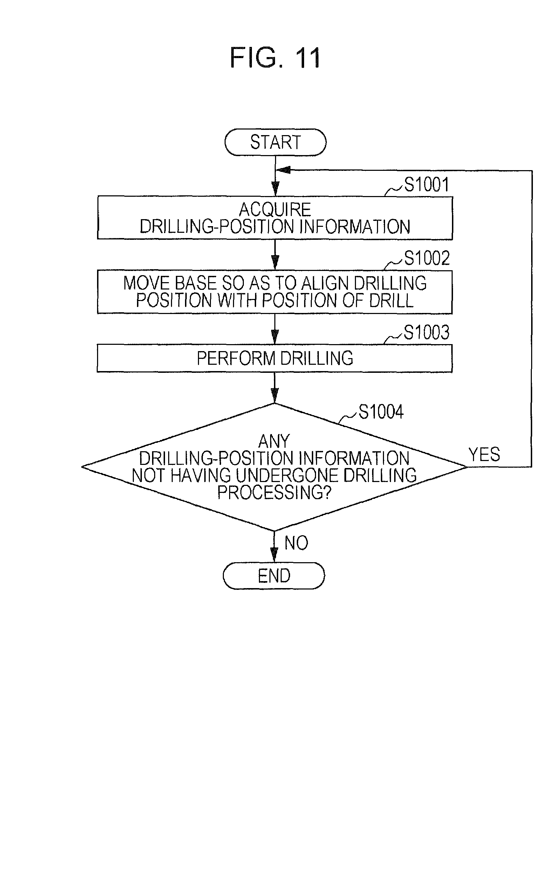

The drilling process performed by such an NC machine tool 100 will now be described with reference to a flow chart in FIG. 11.

When a drilling command is input via the input unit 230, the CPU 220 in the computer 200 refers to the memory 210 so as to acquire one piece of drilling-position information therefrom in step S1001.

Then, in step S1002, the CPU 220 causes the NC machine tool 100 to move the base 110 until the position acquired on the basis of the drilling-position information is aligned with the position of the drill 120 in the X-axis and Y-axis directions.

When this movement is completed, the CPU 220 performs control to move the drill 120 in the Z-axis direction and make the drill 120 perform drilling at that position in step S1003.

When the drilling is completed, the CPU 220 refers to the memory 210 so as to determine whether or not there are any pieces of drilling-position information that have not undergone drilling processing yet. If yes, the process returns to step S1001, whereas if no, the process ends in step S1004.

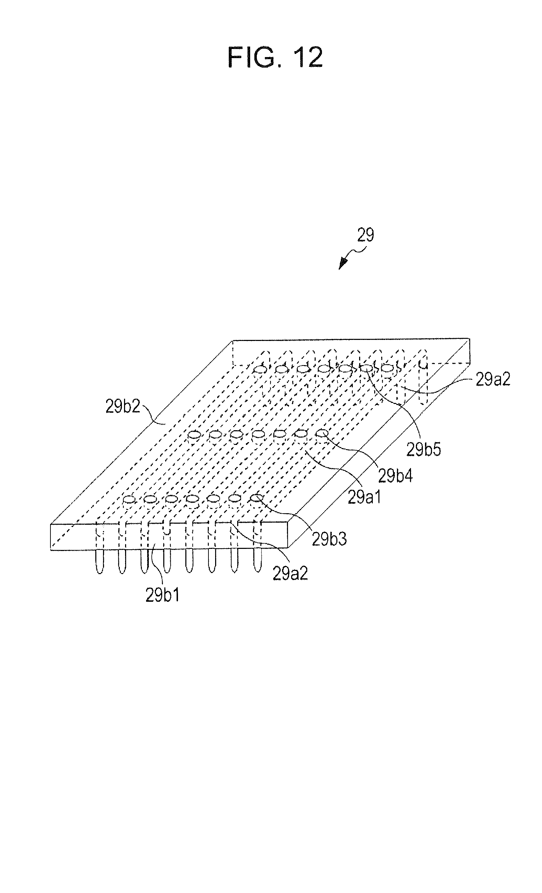

FIG. 12 illustrates the optical waveguide 29 after the ribs 29a4, 29a5, and 29a6 have been removed therefrom as the result of the above-described process. As shown in FIG. 12, the optical waveguide 29 does not have the ribs 29a4, 29a5, and 29a6, but has holes 29b3, 29b4, and 29b5 formed therein by the drill 120.

A process for removing the second segments 29a2 will now be described. After the ribs are completely removed, a removal process of the second segments 29a2 is performed. This removal process is performed by machining the second segments 29a2 by, for example, cutting and grinding so that the second segments 29a2 do not protrude from the surface of the cladding 29b.

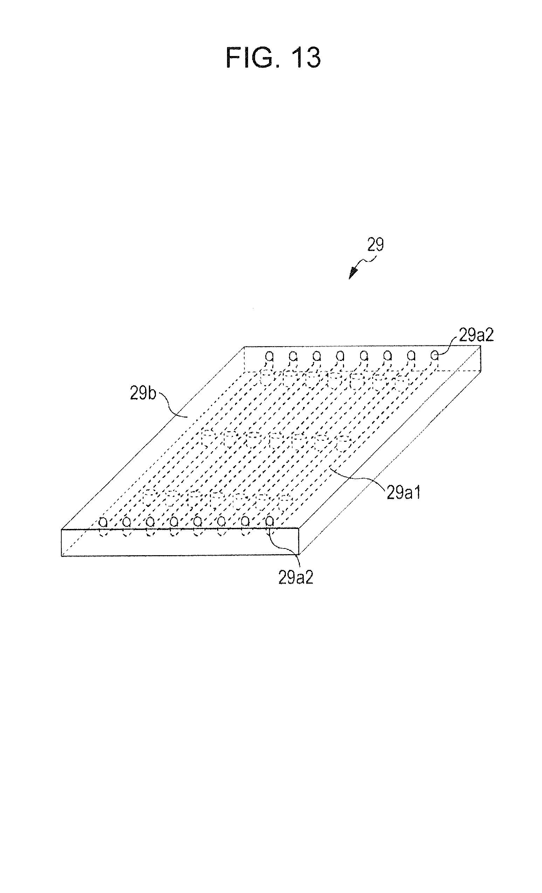

FIG. 13 illustrates the optical waveguide 29 after the removal process.

Consequently, an optical waveguide 29 having multiple cores 29a within a single cladding 29b can be formed.

Although the holes 29b3, 29b4, and 29b5 are formed by drilling in this embodiment, other cutting techniques, such as laser machining, may alternatively be used so long as similar precision can be obtained.

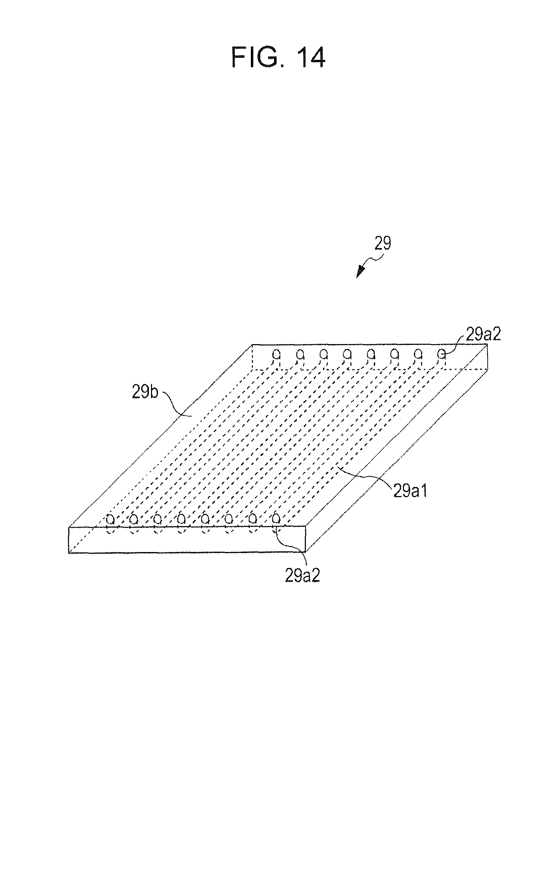

A second filling and curing process will now be described. The optical waveguide 29 in this state is already satisfactory in terms of function. However, because the ribs 29a4, 29a5, and 29a6 integrally formed with the cores 29a have been removed, there is a possibility that light may somewhat leak since the first segment 29a1 of the cores 29a is partly exposed through the holes. In order to prevent this, the same cladding material used for the cladding 29b is filled and cured again in the holes 29b3, 29b4, and 29b5 so as to eliminate the exposed sections, whereby an optical waveguide 29 with reduced light loss can be formed. FIG. 14 illustrates the optical waveguide 29 obtained after this second filling and curing process.

According to this embodiment, the cladding 29b is formed by filling and curing in a state where the ribs 29a4, 29a5, and 29a6 are added between or integrally formed with the adjacent cores 29a, whereby the pitch between the cores 29a can be maintained even when the cores 29a are long or narrow.

Furthermore, in the subsequent removal process, the removing positions of the ribs 29a4, 29a5, and 29a6 are determined by utilizing the sections of the cores 29a that are exposed from the cladding 29b, whereby the ribs 29a4, 29a5, and 29a6 can be readily removed.

Furthermore, since the same cladding material used for the cladding 29b is filled and cured again in the holes formed for removing the ribs 29a4, 29a5, and 29a6, the occurrence of light loss owing to exposed side sections of the cores 29a can be prevented.

## Claims

1. A method for manufacturing an optical waveguide in which multiple cores are embedded in a parallel-arranged fashion within a single cladding, the cores having a refractive index of light different from that of the cladding, the method comprising:
forming the multiple cores in a state where the adjacent cores are connected by a rib;
forming the cladding around the rib and the multiple cores by curing a cladding material there around; and
performing a cutting process to the rib.

2. The method for manufacturing an optical waveguide according to claim 1 or 2, wherein the multiple cores are formed by integrally forming the cores with the rib.

3. The method for manufacturing an optical waveguide according to any of the preceding claims,
wherein the cutting process cuts the rib by drilling.

4. The method for manufacturing an optical waveguide according to any of the preceding claims, wherein the cladding is formed while exposing at least opposite ends of the multiple cores, and
wherein the cutting process for removing the rib is performed by estimating the position of the rib on the basis of a section of the cores that is exposed from the cladding.

5. The method for manufacturing an optical waveguide according to any of the preceding claims, further comprising filling and curing the cladding material into a space which is made by the cutting process.
